Europäisches Patentamt

European Patent Office

Office européen des brevets

(19)

(11) Numéro de publication: **0 208 644**
**B1**

(12) **FASCICULE DE BREVET EUROPEEN**

(45) Date de publication du fascicule du brevet:
30.08.89

(51) Int. Cl.⁴: **C22B 7/00,** C22B 17/02,
H01M 10/54

(21) Numéro de dépôt: **86450009.5**

(22) Date de dépôt: **09.05.86**

(54) Procédé électrothermique de séparation et d'affinage de métaux à partir de produits de récupération.

(30) Priorité: **10.05.85 FR 8507256**

(43) Date de publication de la demande:
**14.01.87 Bulletin 87/3**

(45) Mention de la délivrance du brevet:
**30.08.89 Bulletin 89/35**

(84) Etats contractants désignés:
**BE DE GB IT**

(56) Documents cités:
**EP-A- 0 075 978**
**FR-A- 1 577 619**
**FR-A- 2 014 102**
**GB-A- 290 035**
**US-A- 4 675 048**

(73) Titulaire: **Maillet, Alain, Bout de l'Ile, F-33460 Macau(FR)**

(72) Inventeur: **Maillet, Alain, Bout de l'Ile,
F-33460 Macau(FR)**

(74) Mandataire: **Thébault, Jean-Louis, Cabinet Thébault
S.A. 50 Cours de Verdun, F-33000 Bordeaux(FR)**

## Description

La présente invention a trait à la récupération de métaux partir de déchets industriels et sera décrite ci-après danT le cadre de son application particulière à la récupération de tous les éléments métalliques entrant dans la composition d'accumulateurs électriques, tout spécialement le fer, le nickel et le cadmium, mais il est entendu qu'elle peut s'appliquer d'une manière générale à tous déchets métalliques ou surplus de fabrications d'usine sous forme de métal, hydrate, oxyde ou hydroxyde .

La récupération, notamment du cadmium, des métaux contenus dans certains types d'accumulateurs électriques alcalins hors d'usage, fait l'objet d'une véritable industrie et a suscité la mise en oeuvre de divers procédés de séparation et d'affinage.

Suivant un procédé de traitement connu, décrit par exemple dans le document FR-2.014.102, on met les produits à traiter, après une préparation et sélection manuelle des éléments contenant du cadmium, sous four-cloche étanche et on distille le cadmium.

Cependant, il faut attendre le refroidissement et l'élimination complète du cadmium et de l'oxyde de cadmium (du fait de leur toxicité) avant d'ouvrir le four pour enlever les résidus et recharger le four. Les résidus contenant du fer, du nickel ou d'autres composants sont alors fondus dans d'autres fours de façon classique. Un tel système demande beaucoup de manutentions et représente une perte de temps considérable entre deux opérations de distillation.

Suivant un autre procédé décrit dans le document EP-0075978 on effectue une pyrolise initiale des substances organiques pouvant être contenues dans les déchets à traiter, puis une distillation pour récupérer le cadmium et, enfin, un lingotage du ferro-nickel résiduel récupéré tout en fin de traitement. Ce procédé présente l'inconvénient majeur d'être extrêmement long puisque la pyrolise demande une bonne vingtaine d'heures, de même que la distillation qui lui fait suite.

Le but de l'invention est de pallier ces divers inconvénients en proposant un procédé de récupération non seulement du cadmium mais du ferro-nickel, susceptible d'être mis en œ uvre en un temps remarquablement court et donc de permettre de récupérer à bas prix de revient lesdits métaux ainsi que d'autres, alliés ou non, à partir de produits de récupération.

A cet effet, l'invention a pour objet un procédé électrothermique de séparation et d'affinage de métaux à partir de produits de récupération contenant un métal distillable, procédé qui consiste :
- d'une part, en une phase de fusion dans laquelle on place dans le creuset d'un four électrique induction ou similaire, les produits à traiter, on porte rapidement la température du four au delà de la température de vaporisation dudit métal distillable afin de vaporiser ce dernier en vue d'extraire sous dépression la vapeur de métal distillable tout en la soumettant à une oxydation par apport d'air extérieur et de récupérer les poussières du métal ainsi oxydé, on amène ladite température un niveau pour lequel il n'y a pratiquement plus de métal distillable dans le creuset du four et les matériaux métalliques subsistants sont liquides, et on lingote ces derniers, et,
- d'autre part, indépendamment de la phase de fusion, en une phase de distillation dans laquelle on mélange aux poussières d'oxyde du métal distillable ainsi récupérées, une substance reductrice, on chauffe le mélange au delà de la température d'évaporation dudit métal, puis on condense la vapeur métallique obtenue en vue de récupérer sous forme liquide ledit métal distillable et, enfin, de lingoter celui-ci.

Un tel procédé permet, dans son application à la récupération des accumulateurs au cadmium-nickel, en premier lieu, d'obtenir des lingots de ferro-nickel totalement exempts de cadmium et ne contenant, comme éléments principaux, que du fer et du nickel et, lors de la phase de distillation, des lingots de cadmium titré à 99,95%, l'ensemble des opérations demandant, par exemple pour un traitement de deux tonnes de produits bruts, une heure environ.

D'autres caractéristiques et avantages ressortiront de la description qui va suivre d'une installation pour la mise en oeuvre du procédé ci-dessus, description donnée à titre d'exemple uniquement et en regard des dessins annexés sur lesquels :

- Figure 1 représente schématiquement la partie d'une installation conforme à l'invention affectée à la phase de fusion ;
- Figure 2 représente schématiquement les moyens de récupération des poussières d'oxyde de cadmium associés au dispositif de fusion de la figure 1, et,
- Figure 3 représente schématiquement une unité de distillation conforme à l'invention.

Sur les dessins on a représenté très schématiquement une installation complète mettant en oeuvre le procédé de l'invention dans son application à la récupération de cadmium, d'une part, et de ferro-nickel, d'autre part, à partir d'accumulateurs au nickel-cadmium.

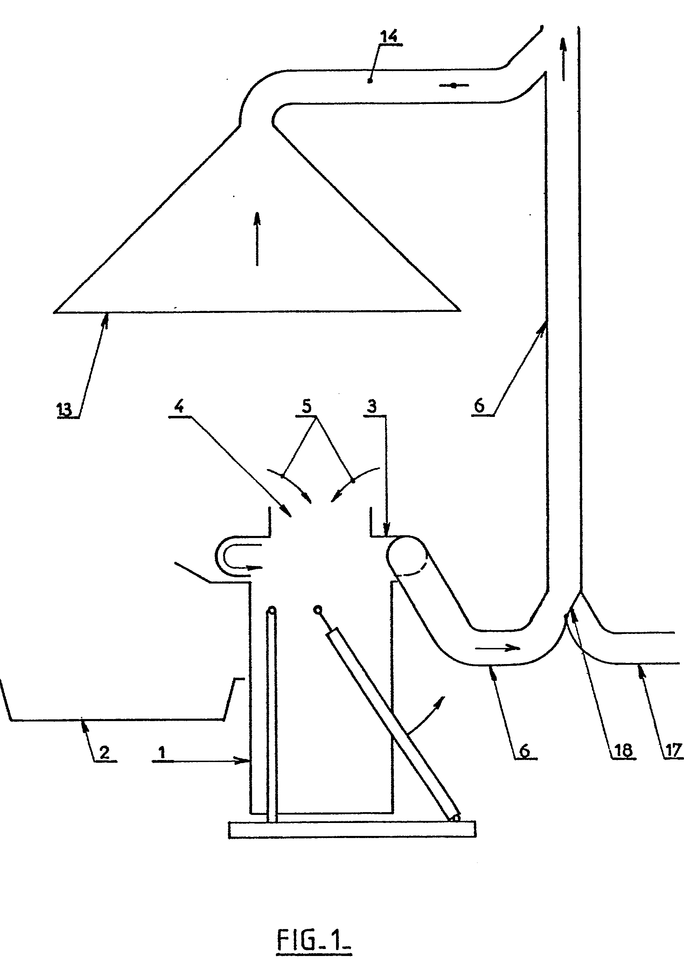

Sur la figure 1 on a symbolisé en 1 un creuset d'un four électrique classique à induction à basculement hydraulique.

A côté du four est disposée une lingotière 2.

Au-dessus du four 1 est placé un capteur de gaz annulaire 3 muni d'une ouverture 4 à sa partie supérieure pour permettre l'apport d'air extérieur 5 en grande quantité.

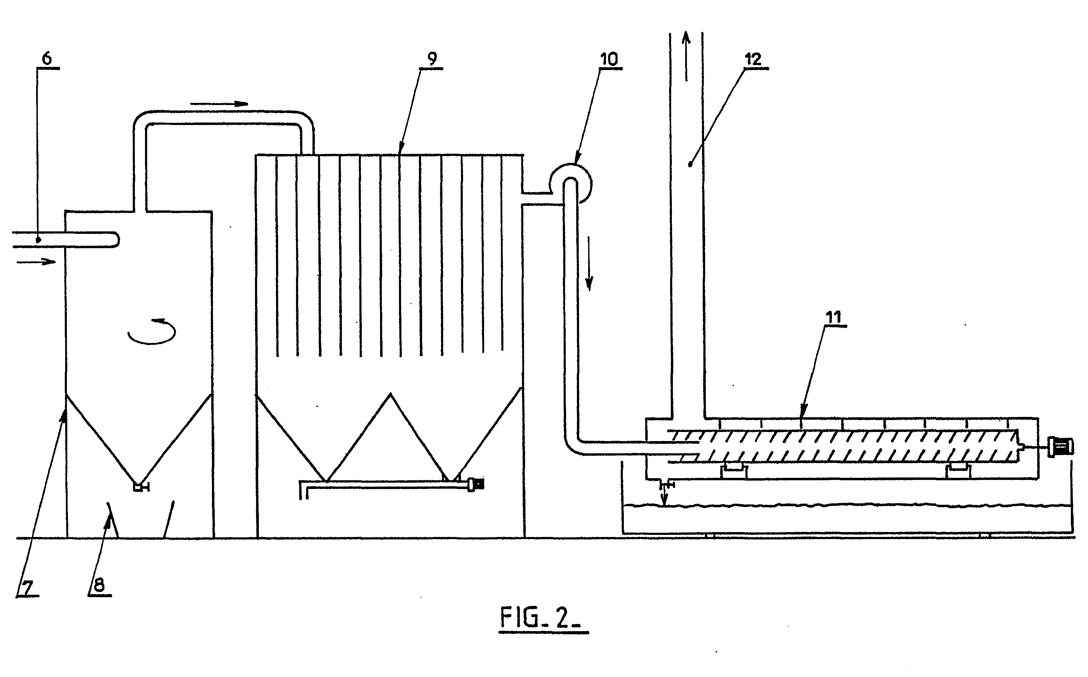

Le capteur 3 est relié à une canalisation de gaz 6 aboutissant à un séparateur cyclone 7 (figure 2) permettant de recueillir en 8 une bonne partie des oxydes de cadmium. A la sortie du cyclone 7 l'air est repris et envoyé dans un dépoussiéreur à manches 9.

A la sortie de cet appareil l'air est repris par un aspirateur-ventilateur 10 envoyant les fumées et gaz contenus dans l'air, en pression dans un système de barbotage d'eau 11, les gaz résiduels étant évacués à l'air libre par une cheminée 12.

L'ensemble four 1-lingotière 2 est surmonté d'une hotte 13 relié par une canalisation 14 à la canalisation 6.

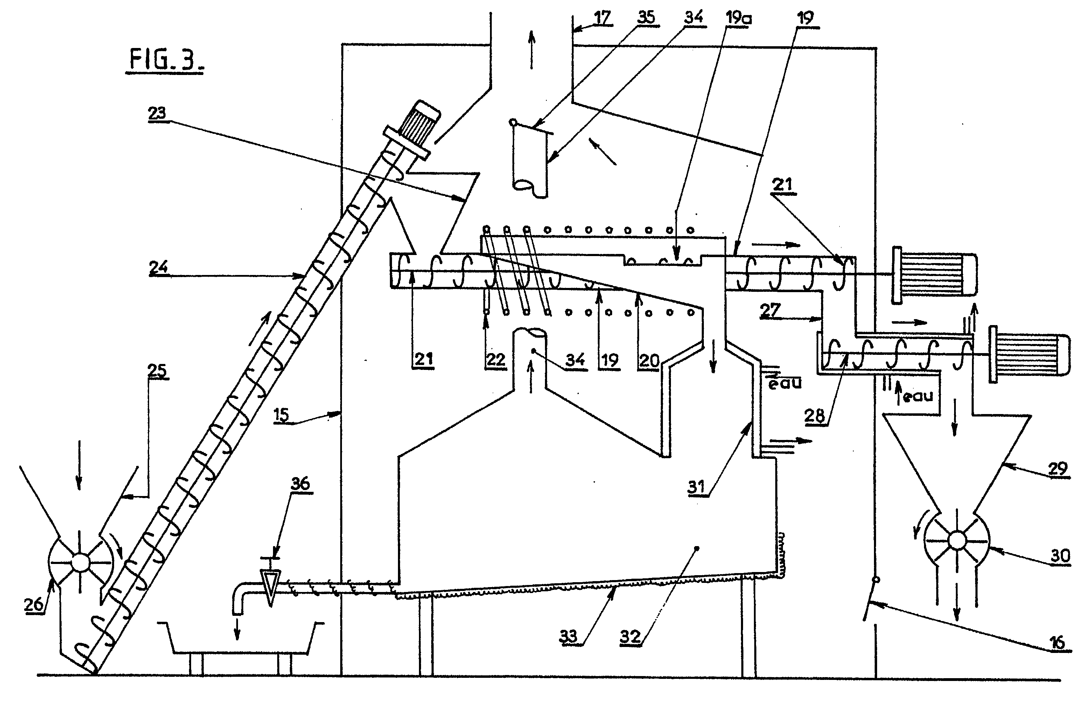

Le dispositif de la figure 3 comprend une cabine blindée 15 dont l'intérieur n'est pas accessible au personnel pendant l'opération de distillation qui se commande de l'extérieur par un pupitre de contrôle et à travers des baies vitrées étanches. Un clapet 16 est prévu dans la paroi de la cabine 15, à sa partie inférieure, et s'ouvre de façon à constituer un passage d'air vers l'intérieur, une légère dépression étant maintenue dans la cabine 15 de façon à ce qu'aucun gaz ne sorte de la cabine qui est, par ailleurs, reliée par une canalisation 17 à la canalisation 6 (figure 1), un registre 18 étant prévu à la jonction des canalisations 6 et 17.

A l'intérieur de la cabine 15 est monté un distillateur composé dans sa partie principale d'un tube 19 en métal réfractaire ouvert dans sa partie supérieure en 19a et muni d'une reprise 20 à la manière d'une cornue, dirigée vers le bas.

A l'intérieur du tube 19 est disposée une vis d'Archimède 21 également en métal réfractaire. L'ensemble 19-21 est entouré d'une bobine électrique 22 de chauffage par induction.

En amont du tube 19 et à l'extérieur de la bobine 22 est disposée une trémie 23 reliée, par un convoyeur à vis d'Archimède 24 traversant la paroi de la cabine 15, à une trémie extérieure 25 de chargement munie d'un distributeur rotatif étanche 26.

En aval du tube 19, à l'extérieur de la bobine 22, est monté un sas 27 relié, par un convoyeur à vis d'Archimède 28 traversant la paroi de la cabine 15, à une trémie extérieure 29 munie d'un distributeur rotatif étanche 30. Le convoyeur 28 est refroidi par un circuit d'eau.

La sortie 20 du tube 19 est raccordée à un tube vertical 31, refroidi par eau et débouchant dans un bac 32 étanche et chauffé par des résistances électriques 33.

L'ensemble 31-33 est disposé à l'intérieur de la cabine 15 et, de même que le tube 19, étanche, seule une cheminée 34 sortant du bac 32 permet, grâce à un clapet à pression 35 de retenue (légère), de laisser sortir les gaz vers la canalisation 17, elle-même reliée à la canalisation 6.

La partie de l'installation représentée à la figure 1 réalise la phase de fusion. Celle-ci consiste à placer dans le creuset du four 1 la charge à traiter, c'est-à-dire, dans le cas de la récupération du fer, du nickel et du cadmium contenus dans des accumulateurs au nickel-cadmium usagés ou mis au rebut, de boîtiers d'accumulateurs, quelles que soient leur taille et sans broyage préalable.

Dès que la température du four atteint et dépasse 765°C le cadmium contenu dans les déchets se vaporise. Le gaz de cadmium et les fumées et autres gaz sont aspirés par le capteur 3. L'apport d'air 5 en grande quantité les refroidit et transforme les vapeurs de cadmium en oxyde de cadmium. L'air chargé de cet oxyde est amené par la canalisation 6 (le registre 18 obturant la canalisation 17) au cyclone 7, puis au dépoussiéreur 9, grâce à une mise en dépression réalisée par l'aspirateur-ventilateur 10.

Après la traversée du dépoussiéreur 9 l'aspirateur 10 reprend les fumées et gaz pour les envoyer en pression dans le dispositif à barbotage d'eau 11, de façon à éliminer notamment les particules ultra-fines d'oxyde de cadmium et autres particules solides, avant la mise à l'air libre des résidus gazeux par la cheminée 12.

Pendant que l'on récupère l'oxyde de cadmium la température dans le four 1 a continué à s'accroître. Lorsque cette température atteint environ 1450°C il ne subsiste plus de cadmium dans le creuset, lequel ne comporte plus comme éléments principaux que du fer et du nickel. On peut alors verser le contenu du creuset dans la lingotière 2, par basculement du four 1, de façon à obtenir des lingots d'alliage de fer-nickel, dont la teneur est contrôlée par un analyseur spectromètre de masse. Au moment de cette opération de coulée, le registre 18 est placé de manière à isoler le capteur 3, les fumées et gaz étant alors repris par la hotte 13 et réintroduits dans la canalisation 6, le changement de position du registre 18 permettant, pendant la coulée, de traiter dans le circuit 7-9-11 les fumées et gaz éventuellement chargés de cadmium provenant de la cabine 15 de distillation.

L'oxyde de cadmium provenant du bac 8 et également du dépoussiéreur 9 est mélangé à une substance réductrice, par exemple du charbon concassé, et amené par tous moyens appropriés dans la trémie 25 (figure 3).

Le mélange est amené par le convoyeur 24 dans la trémie 23 puis dans le tube 19 de distillation par le convoyeur 21.

L'oxyde de cadmium s'y distille à partir de 765°C sous ambiance neutre grâce la combustion du charbon. La bobine 22 porte la température à l'intérieur du tube 19 à environ 950°C par exemple.

Les cendres non métalliques résiduelles sont récupérées par le convoyeur refroidi 28 et évacuées par la trémie 29 et le sas étanche 30.

La vapeur de cadmium générée dans le tube 19 arrive dans le tube refroidi 31 où elle se condense immédiatement en gouttelettes et devient du cadmium métal liquide, à une température inférieure à 700°C. Les gouttelettes tombent dans le bac 32 maintenu une température constante de 350°C environ, c'est-à-dire légèrement au-dessus de la température de fusion (321°C) du cadmium.

A partir d'un certain niveau dans le bac 32 de métal en fusion, une vanne 36 permet la coulée à l'extérieur de la cabine 15 pour lingoter le cadmium titré à 99,95% plus ou moins 0,01%.

La distillation (récupération du cadmium) se fait de manière alternative par rapport à la fusion (récupération du fer-nickel) quand il y a suffisamment d'oxyde de cadmium récupéré dans les dispositifs 7 et 9. Bien entendu on pourrait envisager un fonctionnement simultané à condition de prévoir un système de canalisation adéquat entre l'ensemble dépoussiéreur 7-9 et, d'une part, le four 1, et d'autre part, la cabine 15. Par ailleurs l'alimentation de la trémie 25 en oxyde de cadmium partir dudit ensemble 7-9 et en charbon concassé peut être mécanisée et automatisée.

Avantageusement tous les appareils de l'installation sont munis de sécurités électriques et de capteurs de gaz, de pressions, et de températures, reliés à un automate programmable séquentiel et un tableau synoptique de fonctionnement de toute l'installation.

L'installation permet donc de récupérer en premier lieu du ferro-nickel, puis du cadmium, l'ensemble des opérations s'effectuant en un temps remarquablement court, par exemple une heure pour traiter deux tonnes de produits de récupération bruts.

L'invention s'applique d'une manière générale à la récupération de tout métal distillable contenu dans des produits de récupération, ainsi que dans tous déchets métalliques ou surplus de fabrications d'usine, sous forme de métal, d'hydrate, d'oxyde ou d'hydroxyde. Enfin, on peut également appliquer le procédé de l'invention au traitement de tous minerais contenant un ou plusieurs métaux distillables.

**Revendications**

1. Procédé électrothermique de séparation et d'affinage de métaux à partir de produits de récupération contenant un métal distillable, procédé qui consiste à effectuer successivement une première phase, dite de fusion, destinée à la récupération des matériaux métalliques autre que ledit métal distillable puis une seconde phase, dite de distillation, destinée à la récupération dudit métal distillable, ladite phase de fusion consistant à placer dans le creuset d'un four électrique à induction ou similaire (1), les poduits à traiter, à porter rapidement la température du four au delà de la température de vaporisation dudit métal distillable afin de vaporiser ce dernier en vue d'extraire sous dépression la vapeur de métal distillable tout en la soumettant à une oxydation par apport d'air extérieur (5) et récupérer les poussières du métal ainsi oxydé, à amener ladite température à un niveau pour lequel il n'y a pratiquement plus de métal distillable dans le creuset du four et les matériaux métalliques subsistants sont liquides, et à lingoter ces derniers, cependant que ladite phase de distillation consisté à mélanger aux poussières d'oxyde du métal distillable ainsi récupérées, une substance réductrice, à chauffer le mélange au delà de la temperature d'évaporation dudit métal, puis à condenser la vapeur métallique obtenue en vue de récupérer sous forme liquide ledit métal distillable et, enfin de lingoter celui-ci.

2. Installation pour la mise en oeuvre du procédé suivant la revendication 1, comprenant, d'une part, un dispositif de fusion comprenant un four à induction à creuset basculant (1) surmonté d'un capteur annulaire (3) muni d'une entrée d'air (4) et communiquant par une canalisation (6) avec un ensemble (7,9) de récupération de poussières du métal distillable oxydé, un aspirateur- ventilateur (10) monté en aval dudit ensemble et assurant la reprise des fumées et leur envoi à l'atmosphère après lavage dans un dispositif à barbotage d'eau (11), et, d'autre part, un dispositif de distillation dudit métal oxydé comprenant, disposés à l'intérieur d'une enceinte (15) mise en dépression, un tube de distillation (19) muni intérieurement d'un convoyeur à vis (21) et entouré d'une bobine de chauffage par induction (22), ledit convoyeur (21) recevant à son amont les poussières d'oxyde préalablement mélangées à la substance réductrice et délivrant sa sortie les cendres non métalliques évacuées hors de l'enceinte (15) par un convoyeur refroidi (28), un tube de condensation (31) raccordé à la sortie (20) du tube de distillation (19) et un bac chauffé (32) de réception des gouttelettes de métal condensé, muni de moyens (36) d'évacuation dudit métal, l'intérieur de l'enceinte étant relié par une canalisation (17) et un registre (18) à ladite canalisation (6) reliant ledit capteur (3) audit ensemble de récupération (7,9).

3. Application du procédé de la revendication 1 à l'obtention de lingots de fer-nickel, d'une part, et de cadmium, d'autre part, partir de la récupération d'accumulateurs électriques au nickel-cadmium, ou de sous-produits de leur fabrication.

**Patentansprüche**

1. Elektrothermisches Verfahren zum Trennen und Raffinieren von Metallen aus Aufbereitungsprodukten, die ein destillierbares Metall enthalten, wobei das Verfahren darin besteht, aufeinanderfolgend einen ersten Schritt eines Schmelzens, der dazu bestimmt ist, metallische Materialien anders als das besagte destillierbare Metall rückzugewinnen, dann einen zweiten Schritt einer Destillation, der zur Rückgewinnung des besagten destillierbaren Metalls bestimmt ist, durchzuführen, wobei der besagte Schmelzschritt darin besteht, in den Tiegel eines elektrischen Induktionsofens oder ähnliches (1) die zu behandelnden Produkte einzubringen, die Temperatur des Ofens schnell über die Verdampfungstemperatur des besagten destillierbaren Metalls zu bringen, um dieses letztere zu verdampfen, um unter Unterdruck den Dampf des destillierbaren Metalls abzuziehen, um diesen einer Oxidation durch Außenluftangebot (5) zu unterwerfen, und den Staub des auf diese Weise oxidierten Metalls rückzugewinnen, die besagte Temperatur auf ein Niveau zu bringen, bei dem es praktisch kein destillierbares Metall mehr in dem Tiegel des Ofens gibt und die verbleibenden metallischen Materialien flüssig sind, und letztere abzugießen, während der besagte Schritt des Destillierens darin besteht, dem auf diese Weise gewonnenen Staub aus dem Oxid des destillierbaren Metalls eine reduzierende Substanz beizumischen, die Mischung über die Verdampfungstemperatur des besagten Metalls zu erhitzen, dann den erhaltenen metallischen Dampf zu kondensieren, um in flüssiger Form das besagte destillierbare Metall rückzugewinnen, und dieses abzugießen.

2. Installation zur Durchführung des Verfahrens nach Anspruch 1 umfassend einerseits eine Schmelzvorrichtung umfassend eine Induktionsofen (1) mit einem kippbaren Tiegel, über dem ein ringförmiger Abscheider (3) angebracht ist, der mit einem Lufteintritt (4) versehen ist und über eine Leitung (6) mit einer Wiedergewinnungseinheit (7, 9) für Staub des oxidierten destillierbaren Metalls in Verbindung steht, ein Sauggebläse (10), das stromabwärts von der besagten Einheit angeordnet ist und das Aufnehmen von Rauchgas und ihre Abgabe an die Atmosphäre nach Waschen mit Wasser in einer Waschvorrichtung (11) sicherstellt, und andererseits eine Destilliervorrichtung für das besagte oxidierte Metall, die im Inneren eines unter Unterdruck stehenden Behälters (15) angeordnet ein Destillationsrohr (19), das im Inneren mit einer Förderschnecke (21) versehen und mit einer Induktionsheizschlange (22) umgehen ist, wobei der besagte Förderer (21) an seinem oberen Ende den vorher mit der reduzierenden Substanz gemischten Oxidstaub aufnimmt und an seinem Ausgang die nichtmetallischen Aschen, die aus dem Behälter (15) über einen gekühlten Förderer (28) entfernt werden, abgibt, ein Kondensationsrohr (31), das am Ausgang (20) des Destillationsrohrs (19) angeschlossen ist, und einen beheitzen Aufnahmebehälter (32) zur Aufnahme von kondensierten Metalltropfen umfaßt, der mit Mitteln (36) zum Abführen des besagten Metalls versehen ist, wobei das Innere des Behälters (15) über eine Leitung (17) und einen Schieber (18) mit der Leitung (6), die den besagten Abscheider (3) mit der besagten Wiedergewinnungseinheit (7, 9) verbindet, verbunden ist.

3. Verwendung des Verfahrens nach Anspruch 1 zum Herstellen von Blöcken aus Ferronickel einerseits und Cadmium andererseits aus der Aufbereitung von elektrischen Nickel-Cadmium-Akkumulatoren oder Abfallprodukten aus ihrer Herstellung.

**Claims**

1. Electrothermic process for separating and refining metals from waste products containing a distillable metal, a process which consists in carrying out a first phase, called the fusion phase, designed to recover any metals other than the said distillable metal and a second phase called the distillation phase, designed to recover the said distillable metal; the said fusion phase consists in placing in the crucible of an electric furnace, or similar device (1), the products to be treated, in rapidly bringing the furnace to a temperature above the evaporation temperature of the said distillable metal in order to evaporate this metal and extract at low pressure the vapour of the distillable metal, whilst subjecting it to oxidation by adding air from the outside (5) and in recovering the metallic powder oxidized in this manner, in bringing the said temperature to a level at which there is practically no distillable metal remaining in the crucible and the remaining metallic material is in liquid form, and in pouring this metallic material into ingots; the said distillation phase consists in mixing a reducing agent with the oxide powders of the distillable metal recovered in this way, in heating the mixture above the evaporation temperature of the said metal, then in condensing the metallic vapour obtained in order to recover in liquid form the said distillable metal, and, finally, in pouring this into ingots.

2. Apparatus for carrying out the process as claimed in claim 1, consisting of a fusion device comprising an induction furnace with tilting crucible (1) surmounted by an annular sensor (3) equipped with an air inlet (4) and connected by means of a duct (6) to an assembly (7, 9) for recovering the powder of the oxidized distillable metal, an extractor-ventilator (10) disposed downstream from the said assembly and ensuring that any fumes are removed and then released into the atmosphere after washing in a water scrubbing device (11) and a device for distilling the said oxidized metal comprising, inside a low-pressure chamber (15), a distilling tube (19) equipped on the inside with a feed screw (21) and surrounded by an induction heating coil (22), the said feed screw (21) receiving at its inlet the oxide powder which has previously been mixed with the reducing agent and delivering at its outlet the non-metallic ashes which are removed from the chamber (15) by means of a cooled conveyor (28), a condensation tube (31) connected to the outlet (20) of the distilling tube (19) and a heated tank (32) which receives the droplets of condensed metal, equipped with a means (36) of removing the said metal, the interior of the chamber being connected by means of a duct (17) and a gate (18) to the said duct (6) which connects the said sensor (3) to the said recovery assembly (7, 9).

3. Application of the process as claimed in claim 1, for obtaining ingots of ferronickel and cadmium by means of recovery from nickel cadmium batteries, or by-products of their manufacture.

FIG. 1

FIG. 2.

EP 0 208 644 B1

FIG. 3.